# EUROPÄISCHE PATENTSCHRIFT

(11) **EP 1 491 372 B1**
(45) Veröffentlichungstag und Bekanntmachung des Hinweises auf die Patenterteilung: **22.08.2007**
(21) Anmeldenummer: 04013031.2
(22) Anmeldetag: 02.06.2004
(51) Int. Cl.: B60H 1/00, B60H 1/03

(54) **Vorrichtung zum Austausch von Wärme**
Device for heat exchange
Dispositif d'échange de chaleur

(30) Priorität: 24.06.2003 DE 10328324
(43) Veröffentlichungstag der Anmeldung: 29.12.2004
(73) Patentinhaber: Behr GmbH & Co. KG, 70469 Stuttgart (DE)
(72) Erfinder: Dieksander, Wolfgang, 70794 Filderstadt (DE); Litwing, Erich, 73565 Spraitbach (DE); Schall, Matthias, Dr., 70619 Stuttgart (DE); Schweizer, Gebhard, 71229 Leonberg (DE)

(56) Entgegenhaltungen:
- DE-A- 10 052 134
- DE-A- 19 755 698
- DE-U- 20 212 894

## Beschreibung

Die vorliegende Erfindung bezieht sich auf eine Vorrichtung zum Austauschen von Wärme, insbesondere für Kraftfahrzeuge.

Bei Kraftfahrzeugen werden die Innenräume der Fahrzeuge üblicherweise mit der vom Motor produzierten Abwärme beheizt. Bei modernen verbrauchsoptimierten Motoren produzieren diese jedoch nicht mehr genug Abwärme, um eine komfortable Aufheizung des Fahrzeuginnenraums zu gewährleisten. Daneben steht gerade nach dem Starten des Motors noch nicht genügend Abwärme zur Verfügung, um den Fahrzeuginnenraum zu heizen. Aus diesem Grund wird für derartige Fahrzeuge ein zusätzliches Heizsystem benötigt.

Ein Nachteil dieser zusätzlichen Heizsysteme besteht darin, dass sie einen entsprechenden zusätzlichen Bauraum innerhalb des Heiz- und Kühlsystems, wie beispielsweise der Klimaanlage, benötigen. Bei der Massenherstellung werden Gehäuse sowohl für Vorrichtungen mit zusätzlichem Heizelement als auch ohne zusätzliches Heizelement in gleicher Weise gefertigt. Dies bedeutet, dass in jedem Fall zusätzlicher Bauraum für das zusätzliche Heizelement vorgesehen sein muss.

Es ist bekannt, das Heizelement, welches die Abwärme des Motors nutzt und das zusätzliche Heizelement parallel zueinander anzuordnen. In diesem Falle müsste allerdings in der entsprechenden Anlage Bauraum für das zusätzliche Heizelement vorgesehen sein. Auch sollten in diesem Fall die Querschnittsflächen bzw. die dann von Luft durchströmten Flächen der beiden Heizelemente aufeinander abgestimmt sein.

DE 19755698 A offenbart eine Vorrichtung gemäß dem Oberbegriff des Anspruchs 1. Die zwischenveröffentlichte EP 1 468 850 A offenbart eine ähnliche Vorrichtung.

Der Erfindung liegt daher die Aufgabe zugrunde, die einzelnen Wärmetauscherelement in Bauraum sparender Weise anzuordnen.

Eine weitere Aufgabe der vorliegenden Erfindung besteht darin, eine Möglichkeit zu bieten, die Oberfläche eines Heizelementes unabhängig von der Oberfläche eines zweiten Heizelementes gestalten zu können, bzw. die Oberflächen mehrerer Heizelemente unterschiedlich gestalten zu können.

Dies wird erfindungsgemäß durch eine Vorrichtung zum Austausch und zur Übertragung von Wärme nach Anspruch 1 erreicht.

Die erste und die zweite Heizeinrichtung sind in einem Gehäuse untergebracht, in welchem ein gasförmiges Medium, insbesondere Luft wenigstens teilweise auf einen vorgegebenen Strömungsweg geführt wird.

Bevorzugt sind die erste Heizeinrichtung und die zweite Heizeinrichtung zueinander benachbart angeordnet. Unter benachbart angeordnet wird dabei verstanden, dass der Abstand zwischen wenigstens einem Element der ersten Heizeinrichtung und wenigstens einem Element der zweiten Heizeinrichtung wesentlich geringer ist als die Ausdehnung in einer Hauptausdehnungsrichtung der beiden Heizeinrichtungen.

Bei den Heizeinrichtungen handelt es sich um Einrichtungen mit einer vorgegebenen Höhe, Breite und Tiefe, wobei bevorzugt zwei dieser Dimensionen wesentlich größer gewählt sind als die dritte, so weist beispielsweise die Heizeinrichtung eine vorgegebene bestimmte Länge und Breite und eine dieser Länge und Breite gegenüber geringe Bautiefe aufweist.

In einer weiteren bevorzugten Ausführungsform weist wenigstens eine Heizeinrichtung eine Komponente auf, deren Temperatur sich in Abhängigkeit eines durch diese Komponente fließenden Stromes ändert. Bei dieser Heizeinrichtung handelt es sich insbesondere, aber nicht ausschließlich um eine Heizeinrichtung, welche wenigstens ein PTC - (positive temperature coefficient) Element aufweist.

In einer weiteren bevorzugten Ausführungsform ist wenigstens eine Heizeinrichtung vorgesehen, welche von einem Gas wie insbesondere aber nicht ausschließlich Kohlendioxid (C02) betrieben wird. Bevorzugt ist auch wenigstens eine Heizeinrichtung vorgesehen, welche wenigstens teilweise die Abgaswärme eines Verbrennungsmotors nutzt. Ferner kann auch eine Wärmepumpe als Heizeinrichtung vorgesehen sein.

Bevorzugt weist auch wenigstens eine Heizeinrichtung eine Zuführung und eine Ableitung für ein insbesondere flüssiges Medium auf, welches zum Wärmeaustausch mit der die Einrichtung umströmenden Luft geeignet ist. Bei diesem flüssigen Medium kann es sich beispielsweise - aber nicht ausschließlich - um Wasser aus dem Kühlkreislauf des Kraftfahrzeuges handeln. Bevorzugt ist eine Heizeinrichtung vorgesehen, welche mit einem Kraftstoff, wie Benzin, Diesel, Wasserstoff oder dergleichen betrieben werden kann. Dabei kann eine derartige Heizeinrichtung insbesondere auch unabhängig vom Betrieb des Kraftfahrzeug-Motors betrieben werden.

In einer weiteren bevorzugten Ausführungsform weist die Vorrichtung einen Lüfter auf, welche die Bewegung der Luft durch die Vorrichtung fördert. Dabei kann es sich beispielsweise um einen Ventilator, radialen oder axialen Lüfter oder dergleichen handeln.

In einer bevorzugten Ausführungsform weist die Vorrichtung einen Auslass auf, durch welchen die Luft insbesondere direkt oder indirekt in den Fahrzeuginnenraum geleitet werden kann. Unter direkt wird dabei verstanden, dass der Auslass unmittelbar in den Fahrzeuginnenraum führt, unter indirekt, dass zwischen dem Auslass und dem Fahrzeuginnenraum noch weitere Luftführungselemente angeordnet sind. Dabei können auch mehrere Auslässe getrennt voneinander vorgesehen sein; beispielsweise ein Auslass, der zu einem oder mehreren Fußräumen des Fahrzeuginnenraums führt, Auslässe, welche in einen Frontbereich des Fahrzeuginnenraums führen, Auslässe, welche in einen hinteren Bereich des Fahrzeuginnenraums führen und Auslässe, welche die Luft an die Frontscheibe oder eine der weiteren Scheiben des Kraftfahrzeugs führen.

Bevorzugt kann in Abhängigkeit von der Regelstellung des Lüfters das Verhältnis der Menge an Luft, welche durch die Heizeinrichtung geleitet wird und der Luft, welche an den Heizeinrichtungen vorbei geleitet wird, geregelt bzw. gesteuert werden. Es ist jedoch auch eine Regelung des Lüfters in mehr oder weniger feinen Stufen möglich.

In einer weiteren bevorzugten Ausführungsform weist die Vorrichtung ferner eine Vorrichtung zum Austausch von Wärme auf. Dabei kann es sich beispielsweise um einen Verdampfer oder dergleichen handeln. Dieser Verdampfer kann dabei bevorzugt in Strömungsrichtung der Luft vor den Heizeinrichtungen angeordnet werden. Bevorzugt ist auch eine Anordnung der Vorrichtung zum Austausch von Wärme vor der Luftbewegungsänderungseinrichtung, so dass es möglich ist, die Luft abzukühlen, jedoch dann nicht durch die Heizeinrichtungen zu leiten.

In einer weiteren bevorzugten Ausführungsform weist die Vorrichtung ein Filterelement zum Reinigen der Luft auf. Dieses Element ist dabei bevorzugt im Bereich des Einlasses der Luft, beispielsweise am Lüfter angebracht. Bevorzugt ist das Filterelement so angeordnet, dass es leicht zugänglich ist.

In einer bevorzugten Ausführungsform ist das Filterelement in Strömungsrichtung der Luft vor dem Lüfter angeordnet. Es ist jedoch auch möglich, das Filterelement in Strömungsrichtung der Luft nach dem Lüfter, jedoch vor der Vorrichtung zum Austausch von Wärme vorzusehen.

Bevorzugt ist es ferner, in wenigstens einem Auslass eine Stelleinrichtung vorzusehen, durch welche die Menge der durchströmenden Luft geregelt und/oder gesteuert werden kann. Bei dieser Stelleinrichtung kann es sich beispielsweise um eine Lüftungsklappe oder dergleichen handeln.

Weitere Vorteile der erfindungsgemäßen Vorrichtung ergeben sich aus den beigefügten Figuren.

Darin zeigen:
- Fig. 1: eine Vorrichtung zum Austauschen von Wärme nach dem Stand der Technik;
- Fig. 2: eine erfindungsgemäße Vorrichtung zum Austauschen und Übertragen von Wärme; und
- Fig. 3: eine schematische Darstellung zur Veranschaulichung der gewinkelten Anordnung der beiden Heizeinrichtungen.

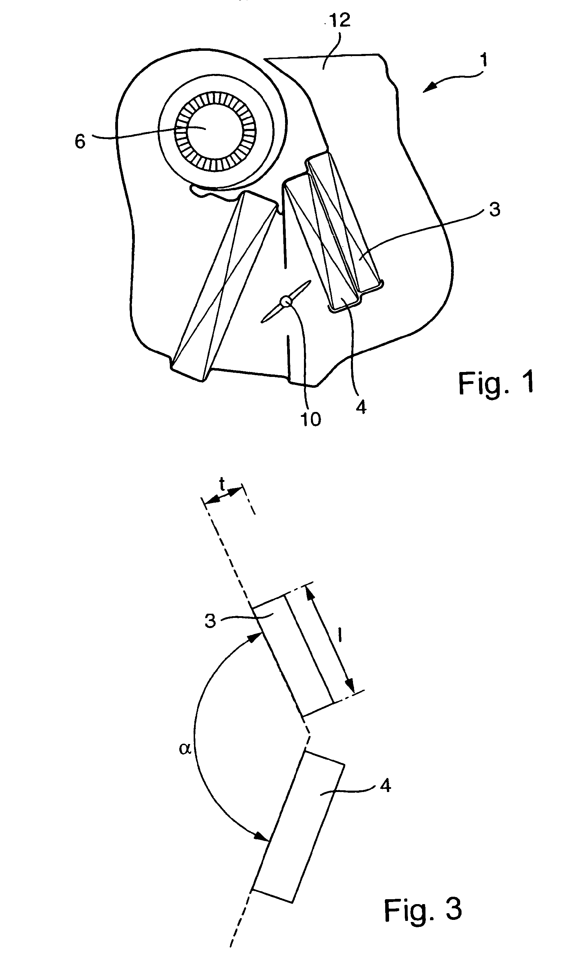

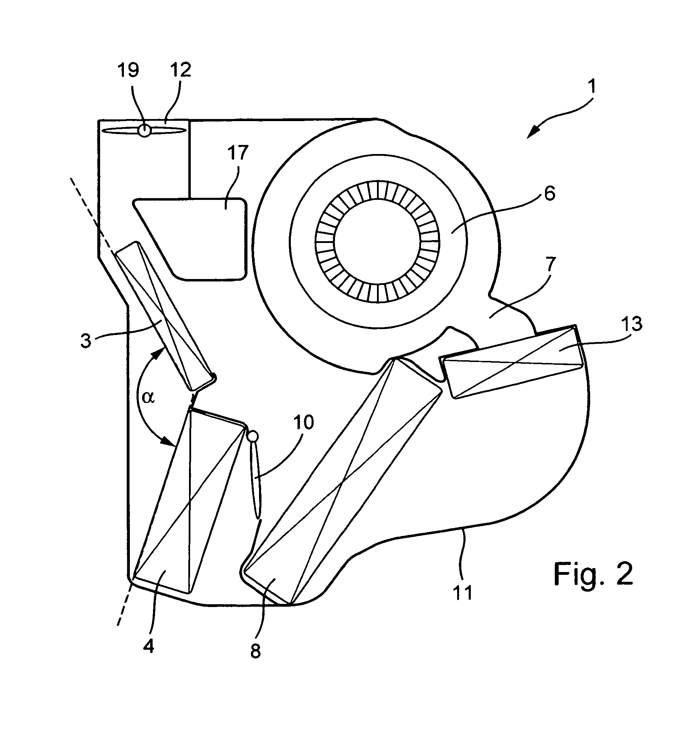

In Fig. 1 ist eine Vorrichtung zum Austausch von Wärme 1 gemäß dem Stand der Technik dargestellt. Das Bezugszeichen 3 bezieht sich auf eine erste Heizeinrichtung, das Bezugszeichen 4 auf eine zweite Heizeinrichtung. Bei der ersten Heizeinrichtung 3 kann es sich beispielsweise um ein PTC (Positive Temperature Coefficient) -Element handeln, welches das bereits oben angesprochene Zusatzheizelement darstellt. Daneben können jedoch auch von Gasen wie Kohlendioxid oder von Abgaswärme eines Verbrennungsmotors betriebene Heizeinrichtungen verwendet werden. Bei der zweiten Heizeinrichtung 4 handelt es sich beispielsweise um einen konventionellen Wärmetauscher, in welchem die Abwärme, das heißt das Kühlwasser genutzt, um die um- bzw. durchströmende Luft zu erwärmen.

Eine Luftklappe 10 dient dazu, den Luftstrom entweder durch die Heizeinrichtung hindurch oder an diesen vorbeizuleiten, oder aber in Zwischenstellungen einen Anteil der Luft durch die Heizeinrichtungen an einen weiteren Anteil der Luft an den Heizeinrichtungen vorbeizuleiten.

Das Bezugszeichen 6 bezieht sich auf einen Lüfter, wie beispielsweise einen Ventilator. Das Bezugszeichen 12 kennzeichnet einen Auslass der Luft, durch welchen die Luft beispielsweise in den Fahrzeuginnenraum geleitet werden kann. Beim Betrieb wird die Luft aus dem Ventilator 6 an der Luftklappe 10 vorbei durch die beiden Heizeinrichtungen 4 und 3 hindurch in Richtung des Auslasses 12 geführt.

Der Motor des Fahrzeuges ist in der Zeichnung links von der Vorrichtung angeordnet.

Fig. 2 zeigt eine erfindungsgemäße Vorrichtung zum Austausch von Wärme. Dabei bezieht sich das Bezugszeichen 7 auf einen Auslass des Lüfters, durch welchen die Luft in die Vorrichtung gedrückt werden kann.

Das Bezugszeichen 13 bezieht sich auf eine Filtereinrichtung, um die durch diese Einrichtung hindurchtretende Luft zu filtern bzw. zu reinigen. Der Filter kann auch an anderer Stelle vorgesehen, beispielsweise in den Lüfter integriert, sein. Das Bezugszeichen 8 bezieht sich auf eine Vorrichtung zum Austausch von Wärme, wie beispielsweise einen Verdampfer, um die durch diesen hindurchtretende Luft zu kühlen. Im Gegensatz zu der in Fig. 1 gezeigten Anordnung sind die beiden Heizelemente 3 und 4 nicht parallel zueinander angeordnet, sondern befinden sich einander gegenüber in einem vorgegebenen Winkel α. Bezugszeichen 12 bezieht sich auf einen Auslass, durch welchen die Luft in den Fahrzeuginnenraum geleitet werden kann. Bezugszeichen 17 kennzeichnet einen weiteren Kanal, durch welchen die Luft beispielsweise zusätzlich in Richtung eines Fußraumes im Fahrzeuginnenraum abgezweigt werden kann.

Das Bezugszeichen 19 bezieht sich auf eine Stelleinrichtung, beispielsweise eine Lüftungsklappe, mittels derer die Menge der durch diese hindurchtretenden Luft, und damit die Menge der in den Fahrzeuginnenraum geleiteten Luft, geregelt bzw. gesteuert werden kann.

Beim Betrieb trifft die vom Lüfter angesaugte und durch den Auslass 7 ausgegebene Luft durch den Filter 13 und dann entlang der Führung 11 durch die Vorrichtung zum Austausch von Wärme 8 hindurch. In Luftströmungsrichtung nach der Vorrichtung zum Austausch von Wärme befindet sich eine Luftklappe 10, welche in mehreren Stellungen verändert werden kann und welche hier in einer Stellung gezeigt ist, in welcher ein Durchgang von Luft durch die Heizeinrichtungen 4 und 3 verhindert wird. Wird diese Klappe 10 nach oben gerichtet, so wird im wesentlichen die ganze Luft durch die Heizeinrichtungen hindurchdringen. In Stellungen zwischen diesen beiden Extremen werden unterschiedliche Anteile von Luft durch die Heizeinrichtungen und an diesen vorbei strömen, um somit ein variables Mischungsverhältnis zu gewährleisten und damit eine Temperaturregulierung zu erreichen. In Fig. 2 wird zwischen den Heizeinrichtungen 4 und 3 die Luft wenigstens teilweise entlang einer Trennwand geführt, welche die erfindungsgemäße Vorrichtung von dem Verbrennungsmotor des Kraftfahrzeuges abtrennt.

Nach dem Hindurchtreten durch die Heizeinrichtungen 4 und 3 gelangt die Luft eventuell noch durch die Kanäle 17 zu den Auslässen 12 und damit in den Fahrzeuginnenraum.

Unter Bezugnahme auf Fig. 3 wird die Anordnung der beiden Heizeinrichtungen in einem vorgegebenen Winkel erläutert.

In Fig. 3 zeigen die Bezugszeichen 3 und 4 die beiden Heizeinrichtungen. Beide Heizeinrichtungen weisen eine (im Fall der Heizeinrichtung 3 gezeigte) Breite b (nicht gezeigt), Länge I und Tiefe t auf. Dabei ist bevorzugt die Tiefe t deutlich geringer als die Breite b und die Länge I. Durch die Breite b und die Länge I wird eine (nicht gezeigte) Fläche aufgespannt. Desgleichen wird im Falle der Heizeinrichtung 4 durch deren Länge und deren Breite eine (nicht gezeigte) Fläche aufgespannt. Zwischen diesen beiden Flächen bzw. in diesen parallelen Flächen wird der vorgegebene Winkel α festgelegt. Im Falle der in Fig. 1 gezeigten Anordnung liegen die beiden Heizeinrichtungen parallel zueinander, so dass der Winkel α in diesem Falle gleich 0 Grad ist.

Im Falle von Fig. 2 würde sich ein Winkel α im Bereich von etwa 130 Grad ergeben.

## Patentansprüche

1. Vorrichtung zum Austauschen von Wärme, insbesondere für Kraftfahrzeuge, mit einem Gehäuse, wenigstens einer ersten und einer zweiten Heizeinrichtung, die in dem Gehäuse angeordnet sind, in welchem ein gasförmiges Medium, insbesondere Luft wenigstens teilweise in einem vorgegebenen Strömungsweg geführt ist sowie mit einer Stelleinrichtung, durch welche die Strömungsrichtung der Luft wenigstens abschnittsweise verändert werden kann, wobei in einer Stellung der Stelleinrichtung der Durchgang von Luft durch wenigstens eine Heizeinrichtung, insbesondere durch beide Heizeinrichtungen im wesentlichen verhindert wird, und die Stelleinrichtung stufenlos einstellbar ist, wobei je nach Einstellung der Stelleinrichtung der Anteil der Luft, der durch die Heizeinrichtungen geführt wird und der Anteil der Luft, der an den Heizeinrichtungen vorbeigeführt wird, geändert und insbesondere geregelt bzw. gesteuert werden können,
**dadurch gekennzeichnet, dass**
die erste Heizeinrichtung und die zweite Heizeinrichtung einen vorgegebenen Winkel zwischen 90 Grad und 180 Grad einschließen und die Luft von der ersten zur zweiten Heizeinrichtung entlang einer Wand des Gehäuses geführt ist, die im eingebauten Zustand die Vorrichtung von einem Verbrennungsmotor abtrennt.

2. Vorrichtung nach Anspruch 1,
**dadurch gekennzeichnet, dass**
die erste Heizeinrichtung und die zweite Heizeinrichtung zueinander benachbart angeordnet sind.

3. Vorrichtung nach wenigstens einem der vorangegangenen Ansprüche,
**dadurch gekennzeichnet, dass**
wenigstens eine Heizeinrichtung eine Komponente aufweist, deren Temperatur sich in Abhängigkeit eines durch diese Komponente fließenden elektrischen Stromes ändert.

4. Vorrichtung nach wenigstens einem der vorangegangenen Ansprüche,
**dadurch gekennzeichnet, dass**
wenigstens eine Heizeinrichtung eine Zuführung und eine Ableitung für ein insbesondere flüssiges Medium aufweist, welches zum Wärmeaustausch mit der diese Heizeinrichtung durchströmenden Luft geeignet ist.

5. Vorrichtung nach wenigstens einem der vorangegangenen Ansprüche,
**dadurch gekennzeichnet, dass**
wenigstens eine Heizeinrichtung von Kraftstoff betrieben wird.

6. Vorrichtung nach wenigstens einem der vorangegangenen Ansprüche,
**dadurch gekennzeichnet, dass**
ein Lüfter, insbesondere elektrischer Lüfter vorgesehen ist, welche die Bewegung der Luft durch die Vorrichtung fördert.

7. Vorrichtung nach wenigstens einem der vorangegangenen Ansprüche,
**dadurch gekennzeichnet, dass**
ein Auslass vorgesehen ist, durch welchen Luft direkt und/oder indirekt in die Fahrgastzelle eines Kraftfahrzeuges geleitet werden kann.

8. Vorrichtung nach wenigstens einem der vorangegangenen Ansprüche,
**dadurch gekennzeichnet, dass**
neben der ersten und der zweiten Heizeinrichtung noch eine Einrichtung zum Austausch von Wärme, insbesondere ein Verdampfer vorgesehen ist.

9. Vorrichtung nach wenigstens einem der vorangegangenen Ansprüche,
**dadurch gekennzeichnet, dass**
eine Einrichtung zum Filtern von Luft, insbesondere im Bereich eines Einlasses vorgesehen ist.

10. Vorrichtung nach wenigstens einem der vorangegangenen Ansprüche,
**dadurch gekennzeichnet, dass**
mehrere Auslässe für die Luft vorgesehen sind.

11. Vorrichtung nach wenigstens einem der vorangegangenen Ansprüche,
**dadurch gekennzeichnet, dass**
an den Auslässen Regeleinrichtungen vorgesehen sind, welche die Menge der durchströmenden Luft regeln bzw. steuern.

## Claims

1. A device for heat exchange, in particular for motor vehicles, having a housing, at least one first and one second heating device which are positioned in the housing in which a gaseous medium, particularly air, is conducted at least partially along a predetermined flow path, and an adjusting device by means of which it is possible in certain sections at least to change the flow direction of the air, in one position of the adjusting device the passage of air through at least one heating device, in particular through both heating devices, being essentially prevented and the adjusting device being continuously adjustable, it being possible to modify and in particular to regulate and/or control the portion of the air conducted through the heating devices and the portion of the air bypassing the heating devices depending on the position of the adjusting device,
**characterised in that**
the first heating device and the second heating device form a predetermined angle of between 90° and 180° and the air is conducted from the first to the second heating device along a wall of the housing which when fitted divides the device from an internal combustion engine.

2. A device in accordance with claim 1,
**characterised in that**
the first heating device and the second heating device are positioned adjacent to one another.

3. A device in accordance with one of the preceding claims,
**characterised in that**
at least one heating device has a component the temperature of which changes dependent on an electrical current flowing through said component.

4. A device in accordance with one of the preceding claims,
**characterised in that**
at least one heating device has a supply and a discharge for an in particular fluid medium which is suitable for heat exchange with the air flowing through said heating device.

5. A device in accordance with one of the preceding claims,
**characterised in that**
at least one heating device is operated by fuel.

6. A device in accordance with one of the preceding claims,
**characterised in that**
a fan, in particular an electrical fan, is provided which promotes the movement of the air by the device.

7. A device in accordance with one of the preceding claims,
**characterised in that**
an outlet is provided through which air can be conducted directly and/or directly into the passenger compartment of a motor vehicle.

8. A device in accordance with one of the preceding claims,
**characterised in that**
in addition to the first and the second heating device there is also provided a device for exchanging heat, in particular an evaporator.

9. A device in accordance with one of the preceding claims,
**characterised in that**
a device is provided for filtering air, in particular in the area of an inlet.

10. A device in accordance with one of the preceding claims,
**characterised in that**
several outlets are provided for the air.

11. A device in accordance with one of the preceding claims,
**characterised in that**
provided at the outlets are regulating devices which regulate and/or control the amount of air flowing through.

## Revendications

1. Dispositif destiné à l'échange de chaleur, en particulier pour des véhicules automobiles, avec un boîtier, avec au moins un premier et un deuxième dispositifs de chauffage qui sont placés dans le boîtier, dans lequel un agent gazeux, en particulier de l'air, est amené au moins partiellement dans un chemin d'écoulement prédéfini, ainsi qu'avec un dispositif de commande, lequel permet de modifier au moins par tronçon le sens d'écoulement de l'air, le passage de l'air à travers au moins un dispositif de chauffage, en particulier à travers les deux dispositifs de chauffage, étant essentiellement empêché dans une position du dispositif de commande, et le dispositif de commande pouvant être réglé en continu, sachant que selon le réglage du dispositif de commande, la part de l'air dirigé à travers les dispositifs de chauffage et la part de l'air passant devant les dispositifs de chauffage peuvent être modifiées et en particulier régulées et/ou commandées, **caractérisé en ce que** le premier dispositif de chauffage et le deuxième dispositif de chauffage délimitent un angle prédéfini entre 90 degrés et 180 degrés et que l'air est dirigé du premier au deuxième dispositif de chauffage le long d'une paroi du boîtier, qui, lorsqu'elle est montée, sépare le dispositif d'un moteur à combustion.

2. Dispositif selon la revendication 1, **caractérisé en ce que** le premier dispositif de chauffage et le deuxième dispositif de chauffage sont placés de manière adjacente l'un par rapport à l'autre.

3. Dispositif selon au moins l'une quelconque des revendications précédentes, **caractérisé en ce qu'**au moins un dispositif de chauffage présente un composant dont la température se modifie en fonction d'un courant électrique circulant à travers ce composant.

4. Dispositif selon au moins l'une quelconque des revendications précédentes, **caractérisé en ce qu'**au moins un dispositif de chauffage présente une admission et une évacuation pour un agent en particulier liquide, lequel est approprié pour l'échange de chaleur avec l'air traversant ce dispositif de chauffage.

5. Dispositif selon au moins l'une quelconque des revendications précédentes, **caractérisé en ce qu'**au moins un dispositif de chauffage fonctionne au carburant.

6. Dispositif selon au moins l'une quelconque des revendications précédentes, **caractérisé en ce qu'**est prévu un ventilateur, en particulier un ventilateur électrique, lequel favorise le déplacement de l'air à travers le dispositif.

7. Dispositif selon au moins l'une quelconque des revendications précédentes, **caractérisé en ce qu'**un échappement est prévu, à travers lequel de l'air peut être dirigé directement et/ou indirectement dans l'habitacle d'un véhicule automobile.

8. Dispositif selon au moins l'une quelconque des revendications précédentes, **caractérisé en ce qu'**outre le premier et le deuxième dispositifs de chauffage, un dispositif supplémentaire, en particulier un évaporateur, est prévu pour l'échange de chaleur.

9. Dispositif selon au moins l'une quelconque des revendications précédentes, **caractérisé en ce qu'**un dispositif pour filtrer l'air est prévu en particulier au niveau de l'admission.

10. Dispositif selon au moins l'une quelconque des revendications précédentes, **caractérisé en ce que** plusieurs échappements sont prévus pour l'air.

11. Dispositif selon au moins l'une quelconque des revendications précédentes, **caractérisé en ce que** des dispositifs de régulation sont prévus au niveau des échappements, lesquels dispositifs régulent et/ou commandent la quantité d'air traversant.
